# EUROPEAN PATENT SPECIFICATION

(11) **EP 0 721 829 B1**
(45) Date of publication and mention of the grant of the patent: **05.04.2000**
(21) Application number: 95200064.4
(22) Date of filing: 11.01.1995
(51) Int. Cl.: B29C 41/28, B29C 41/26, D06N 7/00

(54) **Process for the preparation of a film**
Verfahren zur Herstellung von Folien
Procédé de préparation d'un film

(43) Date of publication of application: 17.07.1996
(73) Proprietor: FORBO- NOVILON PRODUKTIEBEDRIJVEN B.V., 7741 KC Coevorden (NL)
(72) Inventor: Steege, Wim, NL-7751 DB Balen (NL); Bulthuis, Gert Roel, NL-7908 MR Hoogeveen (NL); Rem, Jan, NL-1521 SM Wormerveer (NL)
(74) Representative: Smulders, Theodorus A.H.J., Ir.

(56) References cited:
- DE-A- 2 353 494
- DE-C- 835 807
- GB-A- 2 021 038
- US-A- 2 836 528
- US-A- 3 145 241
- US-A- 3 192 294

## Description

The present invention is directed to a process for the preparation of a film, more in particular to a process for the preparation of a floor- and/or wall-covering. The invention further comprises floor- and/or wall-covering, as well as an apparatus suitable for carrying out the process of the invention.

Floor- and/or wallcoverings are presently produced in large quantities, especially in the form of PVC-containing, optionally foamed, materials. An especially important type of product is the group of cushioned vinyl materials, which are constructed on the basis of a chemically foamed core material.

Those PVC-based cushioned vinyl materials have been used extensively in view of the ease of production, the possibility to provide texturing and/or decoration, ease of processing, ease of cleaning and good wear properties.

Although PVC is the ideal material for producing cushioned vinyls and but also the unfoamed materials, huge pressure is exerted to replace these materials by halogen-free and preferably also plasticiser-free materials. Unfortunately the behaviour of PVC in the production of vinyl floor- and wall-coverings is quite unique, which results therein, that replacing PVC requires the development of novel techniques to be able to produce in an economic way materials that are halogen-free and preferably also plasticiser-free.

One of the difficulties in the production of these type of vinyl materials is the requirement that the materials have to be produced in large amounts, preferably having a width of 2 or 4 meters, whereby the material has to be produced in a reproducible manner and with very narrow tolerances in thickness and structure. Especially due to the large width of the material it is difficult to ensure that the thickness of the material is very constant over the entire width. Due to the excellent processing properties of PVC this object was relatively easy to obtain. Other materials, like polyolefines, such as EVA, require huge investments in processing equipment.

Numerous suggestions have been made for the use of alternative materials in floor- and/or wall-coverings. In DE-A 4121401 a process is suggested, which process comprises scattering a powder-mixture onto a substrate, gelling the powder at a temperature of between 70 and 110°C, followed by flattening between two rollers and foaming. The same type of process is disclosed in DE-A-4135937 and DE-C-835 807.

This process has the disadvantage that it is extremely difficult to produce a layer having an even thickness. Every defect in the thickness becomes immediately visible, making the material unsuitable.

In EP-A-381,971 a process is disclosed that aims at producing PVC-free cushioned flooring on the presently available PVC machinery. According to this process polymethylmethacrylate is used in the form of a mixture of an emulsion and a suspension polymerisate, which is provided with an amount of plasticiser, to obtain a plastisol that can be processed in the same manner as a PVC plastisol. Unfortunately it has been found almost impossible to produce an acceptable floor covering in this way.

In view of these problems applicant has set itself the task of developing a process for the production of vinyls, which does not have these disadvantages, and which process can easily be implemented in an existing plant for the production of cushioned flooring.

It is an object of the invention to provide a novel process, with which process it is possible to produce a film, such as is necessary in the production of vinyl floor- and/or wall-covering. Other objects and advantages of the process will become apparent from the following description thereof.

In a first embodiment the present invention is directed to a process for the preparation of a film composed of at least one polymeric material, said process comprising applying said polymeric material in powder form in an amount in excess of the amount necessary for the required thickness of the film, to a heatable, continuous, moving surface, heating said surface to obtain sintering of part of the powder, removing the excess powder from the surface of the sintered film and removing the film from the said heatable, continuous, moving surface.

The invention is based thereon, that on a moving, continuous surface, for example a continuous steel or plastic belt, powder of the polymer is scattered, followed by heating the belt, preferably from below to a temperature above the sintering temperature of the polymer powder. This results in a sintering of the powder, which forms a more or less coherent layer. Excess powder is removed, for example by suction with air, by brushing, or by gravity when the belts rounds a roller. A combination of those methods is also possible.

The resulting more or less coherent layer is subsequently heated to a temperature above the melting temperature thereof. The film melts and forms a solid coherent film, which is cooled and removed from the surface. It has been found that this process results in a film of good quality, that is eminently suitable for further processing into a floor and/or wall covering. The film can be produced reproducibly, in large widths, at varying thicknesses. During the melting stage it is also possible to crosslink the material, using known techniques.

Surprisingly it has been found, that it is possible to produce a polymeric film in an easy, reliable and reproducible manner, even with the widths required for the production of floor and wall coverings.

It is also possible to include various additives in the powder mixture, such as foaming agents, colouring agents, stabilisers, plasticisers and the like.

Suitable polymers are in the practice of the invention all polymers that are film-forming and that can be obtained in powder form or in dry-blend. Examples of suitable polymers are polyvinylchloride, vinylchloride copolymers, acrylate polymers and copolymers, olefine polymers, such as polyethylene, polypropylene, ethylene and/or propylene copolymers and the like. More in particular it is suitable to use polymers like PVC, EVA, EMA, PMMA, polyethylene and polypropylene.

It is an essential aspect of the invention that the polymer can be scattered on the surface. This means that the polymer should be in the form of separate particles, preferably in powder form. In the case the polymer is produced in powder form, for example using an emulsion or suspension polymerisation process, it can be used directly. If the polymer is not directly available in powder form, suitable grinding, micro granulating and/or micronising techniques have to be applied to comminute the polymer to the required size.

These sizes depend to some degree on the required thickness of the film, whereby suitable average particle sizes (number basis) ranges from 25 µm to 2 mm. Preferred values are between 250µm and 750µm.

In the process of the present invention the continuous moving surface could be the surface of a large cylinder (drum), that is provided with various temperature regions. As such a drum has the disadvantage that it is necessary to heat and cool large amounts of material (steel) in very short periods of time (requiring the use of liquid nitrogen), in order to be able to remove the cooled film from the surface, this embodiment is not preferred.

According to the most preferred embodiment of the invention the moving surface consists of a flexible endless belt, preferably from steel or another flexible metal, which is transported along various heating and cooling sections. By varying the heating rate, the temperature, the speed of the belt and the thickness of the layer scattered on the surface, the thickness of the final film can be regulated. Of course this is also influenced by the type of polymer used.

The thickness of the film produced from the scattered polymer powder may vary between wide ranges, depending on the nature of the material used and the actual application. Toplayers generally vary in thickness between 0.15 and 0.75 mm, with an average value of about 0.3 mm. Foamable layers have generally a thickness between 0.15 and 0.50 mm, whereby the amount of foaming generally results in a blowing ratio of 2-4.

A highly filled, compact layer contained in coverings generally have a thickness between 0.1 and 1.5 mm, with a preferred value between 0.50 and 0.75 mm. Backing layers may vary between wide ranges, the thickness of which is at least partly determined by the other layers present in the covering. Preferred thicknesses are between 0.25 and 3.0 mm, whereby in case of foaming a blowing ratio of about 2 to about 4.5 applies.

It is to be noted that the above values are given by way of example. It may be possible to produce coverings having values outside those ranges, although it is to be remarked that preferred ranges fall within the limits given.

During the sintering stage the heating is preferably from below the moving surface, whereby a possible way of doing it is by the use of infrared heaters, operating on gas or electricity. Another alternative is the use of inductive heating, which is easier to control. In the embodiment wherein the film is subjected to a second heating step, the heating can be done from below or from above the moving surface. A combination of both systems is also possible. The cooling is preferably carried out with the use of cooling rollers, optionally in combination with external cooling.

After the cooling step the film is removed from the surface. Subsequently it can be further processed or stored for further use. According to a preferred embodiment the film is laminated on one or on both sides with one or more other layers. By varying the nature of those layers various interesting materials can be produced. In the operation of the invention it is also possible to repeat the process of applying the powder, sintering and removing excess powder at least once, resulting in a product consisting of more than one layer.

The process of the invention is especially suitable for preparing floor and/or wall-coverings, or vinyls, whereby at least one of the layers is prepared using the techniques disclosed herein above.

According to a specific embodiment of this latter process the invention comprises a process for the preparation of a floor- and/or wall-covering comprising two or more layers, said covering comprising a transparent top layer, which may be lacquered, and at least one, optionally reinforced, backing layer, in which process the polymeric material of at least one backing layer is applied in powder form in an amount in excess of the amount necessary for the required thickness of the layer, to a heatable, continuous, moving surface, heating said surface to obtain sintering of part of the powder, removing the excess powder from the surface of the sintered material and removing the thus obtained layer from the said heatable, continuous, moving surface, and laminating the said layer to at least one other layer.

Said other layer is preferably selected from the group consisting of an optionally printed transparent top layer, a reinforcement layer, such as a polyester felt or a glass web and an optionally foamed, optionally reinforced backing

The said transparent top layer may be a polyester film that is printed on one side with a pattern, which side is laminated onto said at least one layer. As polyester film one can advantageously use the film disclosed in EP-A 576169, which film contains a coating layer of an acrylate and a phtalate plasticiser. One of the major advantages of using such a film lies therein that the film can provide the required support for the floor or wall covering, which means that no further support layer is necessary. As said film is transparent it is possible to provide an ink layer on the film, which ink layer provides the necessary pattern of the floor or wall covering. This ink layer can be present on the inside of the material (reverse printing), that is between the polymer layer and the polyester. Optionally the polyester film may be lacquered on the outside, to provide wear and resistance against dirt. Suitable lacquers are based on two-component heat curing systems and/or UV curing lacquers.

In the preparation of the floor and/or wall coverings preferably a polymeric material is used that is selected from the group consisting of alkylene polymers, such as polyethylene, polypropylene, ethylene-propylene copolymers, ethylene copolymers, including EVA, EMA, EBA, propylene copolymers, PVC, vinylchloride copolymers and PMMA. Preferably the polymeric material is selected from the halogen-free polymeric materials.

The process of the invention is suitable for preparing all kinds of so-called vinyl floor and/or wall coverings. The following description gives examples of some of the possible constructions that can be prepared using the invention. This enumeration is not limited and the person skilled in the art is able, based on his understanding of the invention, to prepare other constructions as well.

The invention is also related to an apparatus suitable for carrying out the process, said apparatus comprising a continuous moving belt, means for applying a powdery material to the surface of said belt, means for heating the belt to obtain sintering of the polymeric material, means for removing excess of powder from the surface of the sintered material, optionally means for melting the sintered film, means for cooling the melted film and means for removing the film from the belt.

The said apparatus may additionally comprise means for laminating the film removed from the belt to at least one other layer.

The invention will now be elucidated on the basis of two figures.

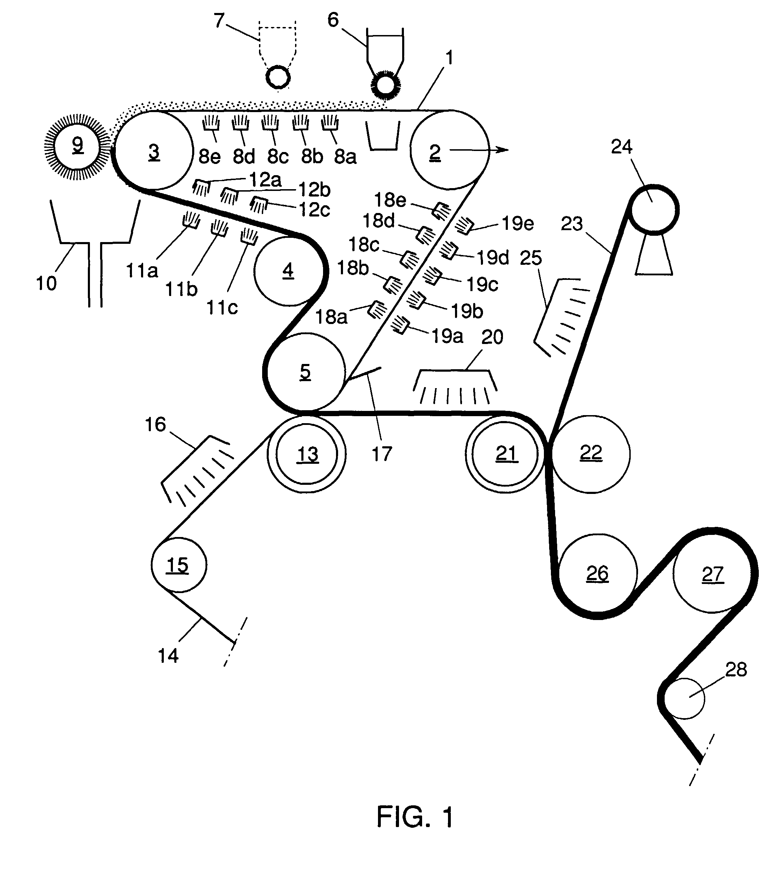

In figure 1 a schematic representation of an apparatus suitable for carrying out the process of the preferred embodiment of the invention has been given. The core of this apparatus is formed by a continuous moving belt 1, which belt is moved using four guide rollers 2-5. Means 6, 7 for scattering polymer powder across the width of the belt are provided above the belt. Although in the figure two units have been shown, it is possible to use only one unit or to use three or more units. Infra red heating means 8^{a}, 8^{b}, 8^{c} and 8^{d} are provided below the surface of the belt. The sintered layer of polymer moves along with the belt to heated guideroller 3, where the excess of powder is removed by a combination of gravity and brushing, using brushing means 9. Suction may also be used. The excess powder is returned to storage and/or reuse through return means 10.

The remaining coherent polymer layer is subsequently heated to a temperature above the melting point of the polymer using infrared heaters 11^{a}, 11^{b}, 11^{c}, 11^{d}, 12^{a}, 12^{b}, 12^{c}, 12^{d} and 12^{e}. The heated film is transported over cooled guide roller 4 and between cooled guiderollers 5 and pressure roller 13. Optionally external cooling may also be applied. As another feature a (temporary) substrate 14 is also fed between the rollers 5 and 13, to provide a further layer on the film. This substrate is guided along guide roller 15, and optionally preheated using (infrared) heating means 16. This sustrate 14 may be any type of film, such as a release layer, that is removed in the end, an impregnated glassweb, optionally in combination with another layer, such as a foamable layer, or an optionally (reverse) printed polyester film. It is to be noted that this substrate may have been produced in the way described in the present invention.

At this stage the film becomes detached from the belt, which returns to oil-heated guideroller 2 via a cleaning knife 17 and infrared preheaters 18^{a}, 18^{b}, 18^{c}, 18^{d}, 18^{e}, 19^{a}, 19^{b}, 19^{c}, 19^{d} and 19^{e}.

The film that has been detached from the belt can subsequently be heated using heating means 20 prior to embossing using pressure roller 21 and embossing cylinder 22. At this stage a further layer 23 may be introduced between the rollers 21 and 22, which layer 23 is fed from storage 24 and is heated using heating means 25. The layer 23 may be any type of film, such as a release layer, that is removed in the end, an impregnated glassweb, optionally in combination with another layer, such as a foamable layer, or an optionally (reverse) printed polyester film. It is to be noted that this layer may have been produced in the way described in the present invention. The combined, embossed film is subsequently cooled using cooling cylinders 26, 27. The final film goes via guide roller 28 to a unit (not shown) for final treatment (lacquering, foaming, cutting, storage).

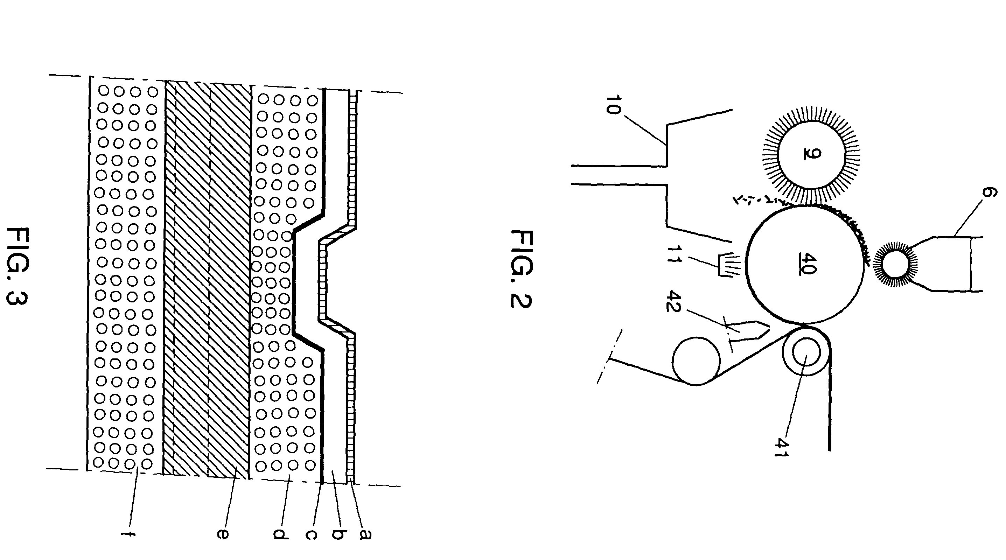

In figure 2 a less preferred embodiment has been shown. In this embodiment one drum is used for all functions in the process. It is to be noted that the figure is not drawn to scale, as the drum should in reality have a diameter of 4-5 times the diameter shown. Said drum is kept at a temperature above the sintering temperature of the powder. Means for scattering 6 are provided above the surface of the drum 40. The scattered powder is first sintered, following which the excess powder is removed by gravity and brushing, using the brushing and return units 9 and 10. Suction may also be applied for removing excess powder. Subsequently the polymer is heated to a temperature above the melting point thereof, for example using additional external heaters 11. The heated film is then cooled from the outside, for example using (liquid) nitrogen (42).

The cooled film is subsequently combined with a further layer that may have been preheated and that has been fed between the roller 40 and a pressure roller 41. The resulting film is detached from the roller and can be further processed, for example as indicated in figure 1, after rollers 5 and 13.

In the following examples some constructions and recipes have been given, which are not intended to limit the invention.

### Examples

| 1. Recipe toplayer in parts by weight: | |
|---|---|
| S-PVC (Solvic 271GC) | 100 |
| Acrylate modifier (Paraloid K 120N) | 2 |
| Plasticiser (BBP/DEHP:1/1) | 34 |
| Epoxymonoester (Estabex 2381) | 3 |
| Heatstabiliser (Irgastab BZ561) | 3 |
| Lubricant (stearic acid) | 0.2 |

| 2. Recipe inhibitable foamlayer in parts by weight: | |
|---|---|
| S-PVC (Solvic 271GC/264GC; 1/2) | 100 |
| Acrylate modifier (Paraloid K 120N) | 2 |
| Plasticiser (BBP/DEHP:4/5) | 45 |
| Epoxymonoester (Estabex 2381) | 3 |
| Filler CaCO₃ | 75 |
| Heatstabiliser (Irgastab K136) | 1.1 |
| Pigment TiO₂ | 1.0 |
| Foaming agent (azodicarbonamide) | 1-3 |
| Kicker ZnO (pharmaceutical grade) | 0.3-0.9 |
| Lubricant (stearic acid/Ba-stearate:2/7) | 0.45 |

| 3. Recipe compact filled layer in parts by weight: | |
|---|---|
| S-PVC (Solvic 271GC/264GC:2/1) | 100 |
| Acrylate modifier (Paraloid K 120N) | 2 |
| Plasticiser (BBP/DEHP:4/5) | 45 |
| Epoxymonoester (Estabex 2381) | 3 |
| Heatstabiliser (Irgastab BZ561) | 3 |
| Filler CaCO₃ | 150 |
| Lubricant (stearic acid) | 0.2 |

| 4. Recipe EVA based toplayer in parts by weight: | |
|---|---|
| EVA-copolymer (Escorene UL 00226) | 100 |
| Plasticiser (DIHP) | 5 |
| Crosslinking agent (Perkadox 14/40MB) | 2 |
| Lubricant (erucamide) | 1 |

| 5. Recipe EVA based (inhibitable) foamable layer in parts by weight: | |
|---|---|
| EVA-copolymer (Escorene UL00218) | 100 |
| Plasticiser (DIHP) | 10 |
| Filler CaCO₃ | 10 |
| Foaming agent (azodicarbonamide) | 1.5 |
| Zinc octoate | 1.0 |
| TiO₂ | 1.0 |
| Lubricant (erucamide) | 0.5 |

| 6. Recipe EVA based filled layer in parts by weight: | |
|---|---|
| EVA-copolymer (Escorene UL00328) | 100 |
| Plasticiser (DIHP) | 15 |
| Filler CaCO₃ | 50 |
| Lubricant (erucamide) | 1.0 |

The PVC based recipes are formulated as dry blends and subsequently scattered on the heated moving surface. The EVA based recipes are first compounded, granulated and subsequently micronised to the required particle size.

Suitable particle sizes are below 300µm for relatively thin layers, whereas for thicker layers particle sizes up to about 500µm are preferred.

A skilled person is able to vary on these recipes on the basis of the properties of the materials.

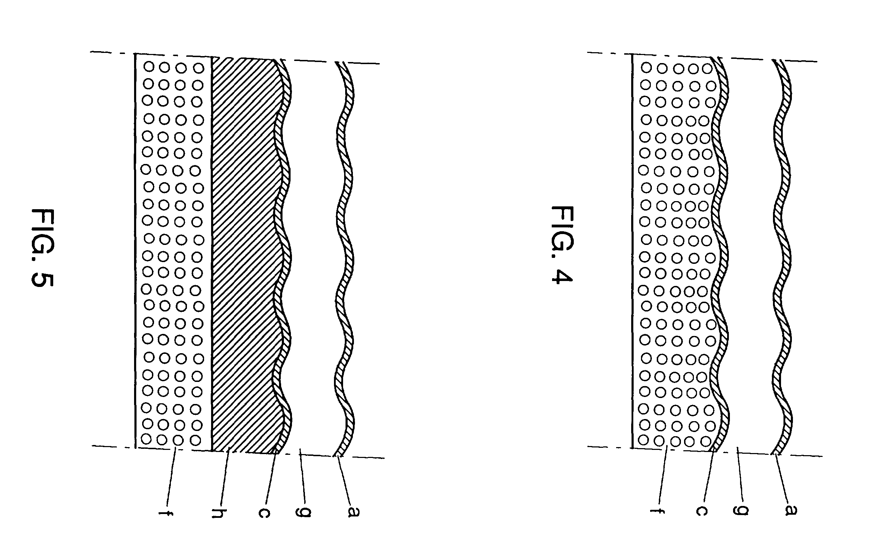

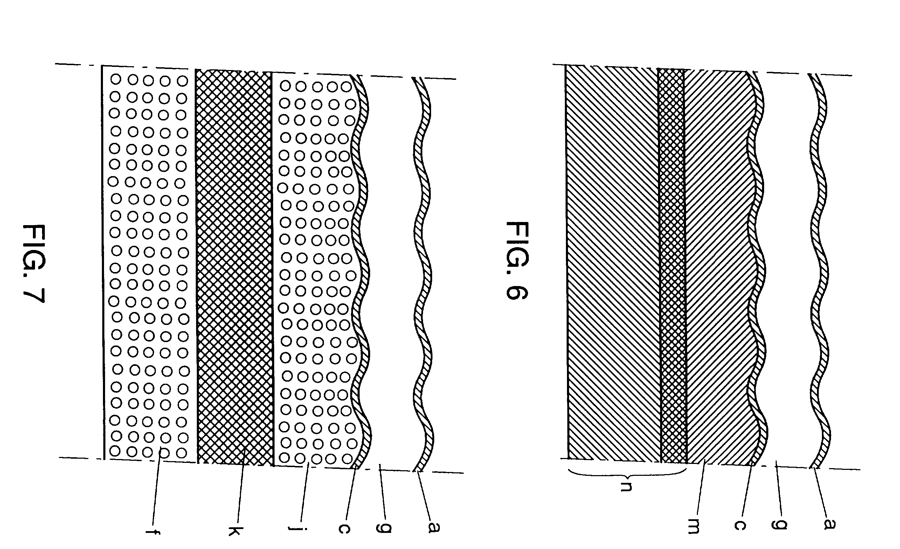

The present invention provides for a method of preparing a film through a scattering technique, which film is preferably used in the production of floor and/or wall coverings. Various constructions of those coverings are possible, for example as is shown in the attached figures 3-7.

The following embodiments (figures 3 to 7) do not form part of the invention.

In figure 3 a conventional type of floor-covering is shown, having a structured toplayer, obtained through chemical inhibition of the foaming. In the figure the toplayer a is a lacquer layer; toplayer b is a solid sintered polymer layer, for example prepared using recipe 1 or 4; c denotes an ink layer containing locally an inhibitor for the foam; d is a chemically foamed layer, prepared using recipe 2 or 5; e is a glassweb impregnated with an impregnation layer prepared using recipe 3 or 6; and f is a foam backing (recipe 2 or 5).

Figure 4 shows a carrier free flexible covering, based upon a lacquered, reverse printed polyester film (a/g/c). Foam layer f is prepared using recipe 2 or 5.

Figure 5 shows a comparable structure as figure 4, with this difference that due to the presence of the white pigmented compact intermediate layer h (recipe 3 or 6) the material has more body.

Figure 6 shows a covering based upon a lacquered, reverse printed polyesterfilm (a/g/c), a white pigmented, coupled intermediate layer m (recipe 3 or 6), attached to a polyester felt n.

Figure 7 shows a system comparable to figure 3, without chemical inhibition of the white pigmented intermediate foam layer j (recipe 2 or 5). The impregnated glassweb k is interleaved between the layer j and the foambacking f (recipe 2 or 5).

Using recipe 4 an EVA based toplayer was prepared on an installation as described in figure 1. A steel belt was preheated using heaters 18 and 19, to a temperature of about 110°C. An excess of EVA-micropowder (total weight 750 g/m²) was scattered on the surface of the belt where it was presintered. An amount of about 270 g/m² was removed at the guide roller 3 by brush 9. The presintered film was subsequently molten by heating to a temperature of 150°C, using heaters 11 and 12. The temperature of the continuous film was reduced using cooling rollers 4 and 5 to a temperature of 70°C.

The EVA film of a thickness of 0.5 mm, was transferred to the surface of substrate 14, using pressure roller 13. The steel belt is subsequently preheated again.

Using a number of installations of the type described in figure 1, a PVC-free floor covering was prepared as shown in figure 3. The toplayer b was prepared using recipe 4, the foam layers d and f were prepared using recipe 5 and the intermediate layer e was prepared using recipe 6.

The properties of the floor covering were as follows:

| | |
|---|---|
| Inflammability (DIN 4102): | B2 |
| Static electricity (DIN 51953): | ≤ 10¹⁰ Ohm |
| Light-fastness (ISO 105;B02): | Blue scale ≥6 |
| Castor chair resistance: | DIN54324 |
| Static indentation resistance (DIN51955) | 0.20 mm |
| Dynamic indentation resistance (EN 424) | Typ I |
| Dimensional stability(DIN 51962) | ≤0.25% |
| Flexibility (DIN 51949) | ⌀ 10mm |
| Abrasion (prEN 660:1992) | Group T |
| Curl (DIN 51962) | ≤ 5mm |

## Claims

1. Process for the preparation of a film composed of at least one polymeric material, said process comprising applying said polymeric material in powder form in an amount in excess of the amount necessary for the required thickness of the film, to a heatable, continuous, moving surface, heating said surface to obtain sintering of part of the powder, removing the excess powder from the surface of the sintered film and removing the film from the said heatable, continuous, moving surface.

2. Process according to claim 1, wherein the thickness of the film is regulated by the temperature, the amount of heating, the speed of the said moving surface, the particle size distribution and/or the type of polymer.

3. Process according to claim 1 or 2, wherein the sintered film, after removal of the excess powder, is further heated to obtain melting of the powder and forming of a continuous film.

4. Process according to claim 1-3, wherein the film is cooled prior to removal from the surface.

5. Process according to claim 4, wherein the cooling is carried out with the use of cooling rollers, optionally in combination with external cooling.

6. Process according to claim 1-5, wherein the film is laminated on one or on both sides with one or more other layers.

7. Process according to claim 1-6, wherein the said heatable, continuous, moving surface is formed by a flexible continuous belt, preferably of metal.

8. Process according to anyone of the claims 1-7, wherein the process of applying the powder, sintering and removing excess powder is repeated at least once.

9. Process for the preparation of a floor- and/or wall-covering comprising two or more layers, in which process at least one or the said layers is prepared using the process of anyone of the claims 1-8.

10. Process for the preparation of a floor- and/or wall-covering comprising two or more layers, said covering comprising a transparent top layer, which may be lacquered, and at least one, optionally reinforced, backing layer, in which process the polymeric material of at least one backing layer is prepared by a process according to any one of the claims 1-9 and laminating the said layer to at least one other layer.

11. Process according to claim 10, wherein the said other layer is selected from the group consisting of an optionally printed transparent top layer, a reinforcement layer, such as a polyester felt or a glass web and an optionally foamed, optionally reinforced backing.

12. Process according to claim 10 or 11, wherein the said transparent top layer is a polyester film that is printed on one side with a pattern, which side is laminated onto said at least one layer.

13. Process according to claim 10-12, wherein the polymeric material is selected from the group consisting of alkylene polymers, such as polyethylene, polypropylene, ethylene-propylene copolymers, ethylene copolymers, including EVA, EMA, EBA, propylene copolymers, PVC and vinylchloride copolymers.

14. Process according to claims 10-13, wherein the polymeric material is selected from the halogen-free polymeric materials.

15. Apparatus suitable for carrying out the process of anyone of the claims 1-14, said apparatus comprising a continuous moving belt, means for applying a powdery material to the surface of said belt, means for heating the belt to obtain sintering of the polymeric material, means for removing excess or powder from the surface of the sintered material, optionally means for melting the sintered film, means for cooling the melted film and means for removing the film from the belt.

16. Apparatus according to claim 15, additionally comprising means for laminating the film removed from the belt to at least one other layer.

## Revendications

1. Procédé pour la préparation d'un film composé d'au moins une matière polymère, ledit procédé comprenant l'application de ladite matière polymère sous forme pulvérulente en une quantité supérieure à la quantité nécessaire pour l'épaisseur requise du film, à une surface mobile continue chauffable, le chauffage de ladite surface pour obtenir le frittage d'une partie de la poudre, le retrait de la poudre en excès de la surface du film fritté et le retrait du film de ladite surface mobile continue chauffable.

2. Procédé selon la revendication 1 dans lequel l'épaisseur du film est régulée par la température, la quantité de chauffage, la vitesse de ladite surface mobile, la distribution de taille des particules et/ou le type de polymère.

3. Procédé selon la revendication 1 ou 2, dans lequel le film fritté, après le retrait de la poudre en excès, est chauffé encore pour obtenir la fusion de la poudre et pour former un film continu.

4. Procédé selon les revendications 1 à 3, dans lequel le film est refroidi avant d'être retiré de la surface.

5. Procédé selon la revendication 4, dans lequel le refroidissement est réalisé au moyen de rouleaux de refroidissement, éventuellement en combinaison avec un refroidissement externe.

6. Procédé selon les revendications 1 à 5, dans lequel le film est stratifié sur un côté ou sur les deux côtés avec une ou plusieurs autres couches.

7. Procédé selon les revendications 1 à 6, dans lequel ladite surface mobile continue chauffable est formée par une bande continue flexible, de préférence en métal.

8. Procédé selon l'une quelconque des revendications 1 à 7, dans lequel le procédé d'application de la poudre, de frittage et de retrait de la poudre en excès est répété au moins une fois.

9. Procédé pour la préparation d'un revêtement de sol et/ou de paroi comprenant deux ou plusieurs couches, procédé dans lequel au moins l'une desdites couches est préparée au moyen du procédé selon l'une quelconque des revendications 1 à 8.

10. Procédé pour la préparation d'un revêtement de sol et/ou de paroi comprenant deux ou plusieurs couches, ledit revêtement comprenant une couche supérieure transparente, qui peut être peinte, et au moins une couche dorsale, éventuellement renforcée, procédé dans lequel la matière polymère d'au moins une couche dorsale est préparée par un procédé selon l'une quelconque des revendications 1 à 9 et par stratification de ladite couche sur au moins une autre couche.

11. Procédé selon la revendication 10, dans lequel ladite autre couche est choisie dans le groupe consistant en une couche supérieure transparente éventuellement imprimée, une couche de renforcement, telle qu'un feutre de polyester ou un voile de verre et une couche dorsale éventuellement renforcée, éventuellement expansée.

12. Procédé selon la revendication 10 ou 11, dans lequel ladite couche supérieure transparente est un film de polyester qui est imprimé sur un côté avec un motif, lequel côté est stratifié sur ladite couche ou lesdites couches.

13. Procédé selon les revendications 10 à 12, dans lequel la matière polymère est choisie dans le groupe consistant en les polymères d'alkylène comme le polyéthylène, le polypropylène, les copolymères éthylène-propylène, les copolymères d'éthylène, y compris EVA, EMA, EBA, les copolymères de propylène, le PVC et les copolymères de chlorure de vinyle.

14. Procédé selon les revendications 10 à 13, dans lequel la matière polymère est choisie parmi les matières polymères sans halogènes.

15. Appareil approprié à la mise en oeuvre du procédé selon l'une quelconque des revendications 1 à 14, ledit appareil comprenant une bande mobile continue, des moyens pour appliquer une matière pulvérulente à la surface de ladite bande, des moyens pour chauffer la bande pour obtenir le frittage de la matière polymère, des moyens pour retirer l'excès de poudre de la surface de la matière frittée, éventuellement des moyens pour faire fondre le film fritté, des moyens pour refroidir le film fondu et des moyens pour retirer le film de la bande.

16. Appareil selon la revendication 15, comprenant en outre des moyens pour stratifier le film retiré de la bande sur au moins une autre couche.

## Patentansprüche

1. Verfahren zur Herstellung eines aus wenigstens einem Polymermaterial bestehenden Films, wobei das Verfahren die folgenden Schritte aufweist: Aufbringen des Polymermaterials als Pulver in einer Menge, die größer als die für die erforderliche Dicke des Films notwendige Menge ist, auf eine erwärmbare, durchgehende, sich bewegende Fläche, Erwärmen der Fläche, um ein Sintern eines Teils des Pulvers zu erreichen, Entfernen des überschüssigen Pulvers von der Oberfläche des gesinterten Films und Entfernen des Films von der erwärmbaren, durchgehenden, sich bewegenden Fläche.

2. Verfahren nach Anspruch 1, bei dem die Dicke des Films durch die Temperatur, den Grad der Erwärmung, die Geschwindigkeit der sich bewegenden Fläche, die Partikelgrößenverteilung und/oder die Art des Polymers geregelt wird.

3. Verfahren nach Anspruch 1 oder 2, bei dem der gesinterte Film nach dem Entfernen des überschüssigen Pulvers weiter erwärmt wird, um das Schmelzen des Pulvers und das Bilden eines durchgehenden Films zu erreichen.

4. Verfahren nach Anspruch 1-3, bei dem der Film vor dem Abnehmen von der Fläche gekühlt wird.

5. Verfahren nach Anspruch 4, bei dem das Kühlen unter Verwendung von Kühlwalzen, wahlweise in Kombination mit externer Kühlung erfolgt.

6. Verfahren nach Anspruch 1-5, bei dem der Film auf einer oder beiden Seiten mit einer oder mehreren Schichten laminiert ist.

7. Verfahren nach Anspruch 1-6, bei dem die erwärmbare, durchgehende, sich bewegende Fläche ein flexibles, endloses Band, vorzugsweise aus Metall, ist.

8. Verfahren nach einem der Ansprüche 1-7, bei dem der Vorgang des Aufbringens des Pulvers, des Sinterns und des Entfernens überschüssigen Pulvers wenigstens ein Mal wiederholt wird.

9. Verfahren zur Herstellung eines Boden- und/oder Wandbelags mit zwei oder mehr Schichten, bei dem wenigstens eine der Schichten unter Verwendung des Verfahrens nach einem der Ansprüche 1-8 hergestellt wird.

10. Verfahren zur Herstellung eines Boden- und/oder Wandbelags mit zwei oder mehr Schichten, wobei der Belag eine transparente obere Schicht, die lackiert werden kann, und wenigstens eine, wahlweise verstärkte. Trägerschicht aufweist, wobei bei dem Verfahren das Polymermaterial wenigstens einer Trägerschicht durch ein Verfahren nach einem der Ansprüche 1-9 hergestellt und die Schicht durch Laminieren auf wenigstens eine andere Schicht aufgebracht wird.

11. Verfahren nach Anspruch 10, bei dem die eine andere Schicht aus einer Gruppe gewählt ist, die aus einer wahlweise bedruckten transparenten oberen Schicht, einer Verstärkungsschicht, beispielsweise einem Polyesterfilz oder einer Glasfaserbahn, und einer wahlweise geschäumten, wahlweise verstärkten Trägerschicht besteht.

12. Verfahren nach Anspruch 10 oder 11, bei dem die transparente obere Schicht ein Polyesterfilm ist, der auf einer Seite mit einem Muster bedruckt ist, welche auf die wenigstens eine Schicht laminiert ist.

13. Verfahren nach Anspruch 10-12, bei dem das Polymermaterial aus der Gruppe ausgewählt ist, die aus Alkylenpolymeren, beispielsweise Polyethylen, Polypropylen, Ethylen-Propylen-Copolymeren, Ethylen-Copolymeren, einschließlich EVA, EMA, EBA, Propylen-Copolymeren, PVC und Vinylchlorid-Copolymeren, besteht.

14. Verfahren nach den Ansprüchen 10 - 13, bei dem das Polymermaterial aus den halogenfreien Polymermaterialien ausgewählt ist.

15. Vorrichtung zur Verwendung bei der Durchführung des Verfahrens nach einem der Ansprüche 1-14, wobei die Vorrichtung aufweist: ein sich bewegendes Endlosband, eine Einrichtung zum Aufbringen von pulverförmigem Material auf die Oberseite des Bandes, eine Einrichtung zum Erwärmen des Bandes zum Erreichen des Sinterns des Polymermaterials, eine Einrichtung zum Entfernen überschüssigen Pulvers von der Oberfläche des gesinterten Materials, wahlweise eine Einrichtung zum Schmelzen des gesinterten Films, eine Einrichtung zum Kühlen des geschmolzenen Films, und eine Einrichtung zum Abnehmen des Films von dem Band.

16. Vorrichtung nach Anspruch 15, ferner mit einer Einrichtung zum Laminieren des vom Band genommenen Films auf wenigstens eine andere Schicht.
